# EUROPEAN PATENT APPLICATION

(11) **EP 4 622 215 A1**
(43) Date of publication of application: **24.09.2025**
(21) Application number: 23896030.6
(22) Date of filing: 04.07.2023
(51) Int. Cl.: H04L 47/70

(54) **COMMUNICATION METHOD AND APPARATUS**

(30) Priority: 30.11.2022 CN 202211545216
(71) Applicant: Huawei Technologies Co., Ltd., Shenzhen, Guangdong 518129 (CN)
(72) Inventor: PANG, Donglei, Shenzhen, Guangdong 518129 (CN); SHENG, Cheng, Shenzhen, Guangdong 518129 (CN)
(74) Representative: Maiwald GmbH
(86) International application number: PCT/CN2023/105747
(87) International publication number: WO 2024/113867

(57) **Abstract**

This application provides a communication method. The communication method performed by a first communication apparatus. The communication method includes: obtaining first overlay tunnel information, where the first overlay tunnel information is associated with a first overlay tunnel created by the first communication apparatus; and sending a first protocol packet to a second communication apparatus, where the first protocol packet includes identification information of the first communication apparatus and the first overlay tunnel information. In this application, the first communication apparatus transfers the identification information of the first communication apparatus and the first overlay tunnel information to the second communication apparatus via the protocol packet.

## Description

This application claims priority to Chinese Patent Application No. 202211545216.7, filed with the China National Intellectual Property Administration on November 30, 2022 and entitled "COMMUNICATION METHOD AND APPARATUS", which is incorporated herein by reference in its entirety.

### TECHNICAL FIELD

The present invention relates to the field of communication technologies, and in particular, to a communication method and apparatus.

### BACKGROUND

Currently, a global backbone network can be constructed in a plurality of manners. For example, the global backbone network can be constructed by independently establishing dedicated lines or by using leased dedicated lines from operators. However, it is difficult to obtain some regional dedicated line resources for constructing the global backbone network, or costs of constructing the global backbone network are very high. In addition, a plurality of regional dedicated lines exhibit unstable quality and frequent interruptions, and a backup line like an internet dedicated line is required. Usually, an overlay tunnel may be statically created step by step or a point-to-point virtual connection may be statically configured between communication apparatuses at two ends of the internet dedicated line. According to an interior gateway protocol (interior gateway protocol, IGP) or a border gateway protocol (border gateway protocol, BGP), information about the virtual connection is advertised, and user data is forwarded by a user. If the virtual connection is a point-to-point traffic engineering (traffic engineering, TE) tunnel, the information about the virtual connection may be an ID and a type of the TE tunnel. However, for statically creating the overlay tunnel step by step or statically configuring the point-to-point virtual connection, configuration is complex, workload is heavy, and data-plane encapsulation efficiency is low.

### SUMMARY

This application provides a communication method and apparatus, to resolve technical problems of complex configuration, heavy workload, and low data-plane encapsulation efficiency that are caused by statically creating an overlay tunnel step by step or statically configuring a point-to-point virtual connection, and advertising information about the virtual connection based on an IGP or BGP.

According to a first aspect, this application provides a communication method. The method includes:
A first communication apparatus obtains first overlay tunnel information, where the first overlay tunnel information is associated with a first overlay tunnel created by the first communication apparatus.

The first communication apparatus sends a first protocol packet to a second communication apparatus, where the first protocol packet includes identification information of the first communication apparatus and the first overlay tunnel information.

In this application, manual configuration is not required before the communication apparatus sends the identification information of the communication apparatus and the overlay tunnel information via the protocol packet. In this way, workload is reduced, so that a multi-hop communication apparatus may obtain overlay topology information based on the identification information and the overlay tunnel information that are advertised by another communication apparatus, and calculate an overlay route to any communication apparatus based on the overlay topology information.

In a possible implementation, the protocol may be IGP, another existing protocol, or a user-defined protocol. In other words, the first protocol packet may be a first IGP packet. In another possible implementation, the first protocol packet may alternatively be a first user-defined protocol packet.

In a possible implementation, the method further includes:
The first communication apparatus automatically runs a protocol process.

The first communication apparatus generates a logical interface.

The first communication apparatus dynamically enables the protocol based on the logical interface.

For example, the first communication apparatus automatically runs an IGP process, the first communication apparatus generates a logical interface, and the first communication apparatus dynamically enables IGP based on the logical interface.

In a possible implementation of this application, an IGP process is automatically run, a logical interface is automatically generated, and IGP is automatically and dynamically enabled based on the logical interface, to transfer the identification information of the first communication apparatus and the first overlay tunnel information. The entire procedure is automatically completed, without manual configuration. In this way, workload is reduced, and for a global backbone network, efficiency of networking and deployment, and efficiency of operation and maintenance are improved. In another possible implementation of this application, the IGP process may alternatively be manually configured.

In another possible implementation, the first communication apparatus runs a data communication network (data communication network, DCN) component, invokes an IGP interface via a DCN protocol, and runs an IGP process.

The first communication apparatus generates a logical interface.

The first communication apparatus dynamically enables IGP based on the logical interface.

In a possible implementation, an address of the logical interface is the same as an internet protocol (internet protocol, IP) address of a local transport network port (transport network port, TNP) of the first overlay tunnel.

In a possible implementation, the first overlay tunnel information includes the IP address of the local transport network port TNP of the first overlay tunnel and an IP address of a peer transport network port TNP of the first overlay tunnel. For example, the IP address may be an IPv6 address or an IPv4 address.

In a possible implementation, the first overlay tunnel information further includes a first overlay tunnel segment identifier (segment ID, SID) that is in a Locator of the first communication apparatus and that is allocated to the first overlay tunnel.

In a possible implementation, the first overlay tunnel SID is an End.X SID, and is used to identify the first overlay tunnel.

In a possible implementation, the method further includes:
The first communication apparatus obtains the Locator from an internet service provider (internet service provider, ISP) according to a dynamic host configuration protocol (dynamic host configuration protocol, DHCP). The Locator is used to identify the first communication apparatus.

In a possible implementation, the method further includes:
The first communication apparatus receives a second protocol packet sent by the second communication apparatus, where the second protocol packet includes identification information of the second communication apparatus and second overlay tunnel information, and the second overlay tunnel information is associated with a second overlay tunnel created by the second communication apparatus.

In this application, the first communication apparatus receives the identification information of the second communication apparatus and the second overlay tunnel information that are transferred by the second communication apparatus via the second protocol packet.

In a possible implementation, the second protocol packet may be a second IGP packet. In another possible implementation, the second protocol packet may alternatively be a second user-defined protocol packet.

In a possible implementation, the second overlay tunnel information includes an IP address of a local transport network port TNP of the second overlay tunnel and an IP address of a peer transport network port TNP of the second overlay tunnel.

In a possible implementation, the second overlay tunnel information further includes a second overlay tunnel SID that is within Locator of the second communication apparatus and that is allocated to the second overlay tunnel.

In a possible implementation, the method further includes: The first communication apparatus obtains overlay topology information based on the first overlay tunnel information and the second overlay tunnel information.

In a possible implementation, the method further includes: The first communication apparatus calculates an overlay route to the second communication apparatus based on the overlay topology information.

In this application, the overlay route from the first communication apparatus to the second communication apparatus may be calculated in a distributed manner. In this way, network reliability is enhanced.

In a possible implementation, the overlay route is a software-defined wide area network (software-defined wide area network, SD-WAN) overlay route.

In a possible implementation, the first overlay tunnel is an SD-WAN overlay tunnel.

In a possible implementation, the method further includes:
The first communication apparatus sends a third protocol packet to a third communication apparatus, where the third protocol packet includes the identification information of the first communication apparatus and the first overlay tunnel information.

In this application, the first communication apparatus transfers the identification information of the first communication apparatus and the first overlay tunnel information to any communication apparatus via the protocol packet. In other words, the first communication apparatus may automatically spread the identification information of the first communication apparatus and the first overlay tunnel information to a multi-hop communication apparatus via the protocol packet, without manual configuration. In this way, workload is reduced. In this way, the multi-hop communication apparatus can obtain the topology information based on the identification information of the first communication apparatus and the first overlay tunnel information, and calculate an overlay route to any communication apparatus based on the topology information.

In a possible implementation, the third protocol packet is a third IGP packet. In another possible implementation, the third protocol packet may alternatively be a third user-defined protocol packet.

In a possible implementation, the method further includes:
The first communication apparatus receives a fourth protocol packet sent by the third communication apparatus, where the fourth protocol packet includes identification information of the third communication apparatus and third overlay tunnel information, and the third overlay tunnel information is associated with a third overlay tunnel created by the third communication apparatus.

In a possible implementation, the fourth protocol packet is a fourth IGP packet. In another possible implementation, the fourth protocol packet may alternatively be a fourth user-defined protocol packet.

The communication apparatuses in this application may transmit data to each other by running a same protocol process. In a possible implementation, the communication apparatus in this application automatically runs a protocol process, automatically generates a logical interface, and automatically and dynamically enables a protocol, for example, an IGP, based on the logical interface, to transfer the identification information of the communication apparatus and the overlay tunnel information to another communication apparatus. The entire procedure is automatically completed, without manual configuration. In this way, workload is reduced, and for the global backbone network, efficiency of networking and deployment, and efficiency of operation and maintenance are improved. In another possible implementation, in this application, the protocol process, for example, the IGP process, may alternatively be manually configured.

According to a second aspect, this application further provides a communication method. The method includes:
A second communication apparatus receives a first protocol packet sent by a first communication apparatus, where the first protocol packet includes identification information of the first communication apparatus and first overlay tunnel information, and the first overlay tunnel information is associated with a first overlay tunnel created by the first communication apparatus.

The second communication apparatus obtains the first overlay tunnel information based on the first protocol packet.

In this application, the second communication apparatus may receive the identification information of the first communication apparatus and the first overlay tunnel information that are transferred by the first communication apparatus via the protocol packet.

In a possible implementation, the method further includes:
The second communication apparatus obtains overlay topology information based on the first overlay tunnel information and second overlay tunnel information, where the second overlay tunnel information is associated with a second overlay tunnel created by the second communication apparatus.

In a possible implementation, the method further includes: The second communication apparatus calculates an overlay route to the first communication apparatus based on the overlay topology information.

In this application, the overlay route from the second communication apparatus to the first communication apparatus may be calculated in a distributed manner. In this way, network reliability is enhanced.

In a possible implementation, the second overlay tunnel is an SD-WAN overlay tunnel.

In a possible implementation, the method further includes:
The second communication apparatus sends a second protocol packet to the first communication apparatus, where the second protocol packet includes identification information of the second communication apparatus and the second overlay tunnel information.

In a possible implementation, the method further includes:
The second communication apparatus sends a fifth protocol packet to a third communication apparatus, where the fifth protocol packet includes identification information of the second communication apparatus and the second overlay tunnel information.

In this application, the second communication apparatus transfers the identification information of the second communication apparatus and the second overlay tunnel information to the first communication apparatus and the third communication apparatus via the protocol packet.

In a possible implementation, the method further includes:
The second communication apparatus receives a sixth protocol packet sent by the third communication apparatus, where the sixth protocol packet includes identification information of the third communication apparatus and third overlay tunnel information, and the third overlay tunnel information is associated with a third overlay tunnel created by the third communication apparatus.

For beneficial effects of the communication method provided in the second aspect, refer to the beneficial effects of the communication method provided in the first aspect. Details are not described herein again.

According to a third aspect, this application provides a communication apparatus, including at least one processor. The processor is configured to execute a program stored in a memory, and when the program is executed, the communication apparatus is enabled to perform:
the method in the first aspect and the possible implementations of the first aspect; or
the method in the second aspect and the possible implementations of the second aspect.

In a possible design, the communication apparatus may further include the memory. Optionally, the processor and the memory are integrated together.

In another possible implementation, the memory is disposed outside the communication apparatus.

According to a fourth aspect, this application provides a computer program product including instructions. When the computer program product is run on a processor, a computer is enabled to perform the method in the first aspect and the possible implementations of the first aspect, or a computer is enabled to perform the method in the second aspect and the possible implementations of the second aspect.

According to a fifth aspect, this application provides a computer-readable storage medium. The computer-readable storage medium stores a computer program. When the computer program is executed by a processor, the method in the first aspect and the possible implementations of the first aspect is performed, or the method in the second aspect and the possible implementations of the second aspect is performed.

According to a sixth aspect, this application provides a communication system, including a first communication apparatus configured to implement the communication method according to the first aspect and a second communication apparatus configured to implement the communication method according to the second aspect.

In a possible implementation, the communication system further includes the third communication apparatus in the communication method according to the first aspect and/or the third communication apparatus in the communication method according to the second aspect.

### BRIEF DESCRIPTION OF DRAWINGS

FIG. 1 is a diagram of an application scenario according to an embodiment of this application;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of calculating a low-latency TE path from a node R1 to a node R5 according to an embodiment of this application; and
FIG. 9 is a diagram of a structure of a communication apparatus 900 according to an embodiment of this application.

### DESCRIPTION OF EMBODIMENTS

To make objectives, technical solutions, and advantages of embodiments of this application clearer, the following describes specific implementations of embodiments of this application in detail with reference to accompanying drawings.

It should be noted that, the term "and/or" in this application describes only an association relationship for describing associated objects and represents that three relationships may exist. For example, A and/or B may represent the following three cases: Only A exists, both A and B exist, and only B exists. In the specification and claims in embodiments of this application, the terms "first", "second", and so on are intended to distinguish between different objects but do not indicate a particular order of the objects. For example, a first communication apparatus and a second communication apparatus are used to distinguish between different communication apparatuses, and are not used to describe a specific order of target objects. In embodiments of this application, the word "example" or "for example" is used to represent giving an example, an illustration, or a description. Any embodiment or design scheme described by using "example" or "for example" in embodiments of this application shall not be construed as being more preferred or having more advantages than another embodiment or design scheme. To be precise, use of the word such as "example" or "for example" is intended to present a relative concept in a specific manner. In the descriptions of embodiments of this application, unless otherwise stated, "a plurality of" means two or more than two.

Before this solution is described, technical terms in this solution are first explained.
1. Segment routing (segment routing, SR): SR is a protocol designed based on source routing to forward a data packet on a network. SR divides a network path into segments, and allocates segment identifiers IDs to the segments and forwarding nodes in the network. The segments and nodes in the network are arranged in order, to obtain a segment list (segment list) of a forwarding path. SR encodes the segment list that identifies the forwarding path in a data packet header for transmission with the data packet. After receiving the data packet, a receive end parses the segment list. If a top segment identifier of the segment list is the current node, the identifier is popped out, and a follow-up procedure is performed. Alternatively, if a top segment identifier is not the current node, the data packet is forwarded to a next node in a conventional routing and forwarding manner.
2. Segment routing over IPv6 (segment routing over IPv6, SRv6): SRv6 is a method designed based on source routing to forward an IPv6 data packet on a network. SR based on an IPv6 forwarding plane implements hop-by-hop forwarding by inserting a routing extension header (segment routing header, SRH) into an IPv6 packet, pushing an explicit IPv6 address stack onto the SRH, and continuously updating an IPv6 destination address and offsetting the address stack on a transit node. The SRv6 technology uses an existing IPv6 forwarding technology to implement network programmability based on a flexible IPv6 extension header. SRv6 defines some IPv6 addresses as instantiated SIDs (segment IDs), each of the SIDs has its own explicit functions. Different SIDs are operated to implement a simplified virtual private network (virtual private network, VPN) and flexible path planning. An SRv6 packet carries the SRH. The SRH includes a plurality of segment lists. Generally, each segment list includes Locator, Function, and Argument. The Locator is used to identify information about a route to a node, and the Function and the Argument indicate a network function that needs to be executed on the node and a matching parameter. Lengths of the Locator, Function, and Argument parts are variable, but a total length of the three parts is less than 128 bits.
3. Locator is a locator identifying an SR node. Each node has at least one globally unique Locator value to be used as a shared prefix of a local SID. Another node accesses an SID of the current node via a Locator route. The Locator value may be a numeric value or may be an IPv6 address.
4. Software-defined wide area network (software defined WAN, SD-WAN): The SD-WAN is an important practice of software-defined networking (software-defined networking, SDN). A network controller is introduced, and network, security, and wide area network optimization technologies are integrated, to implement enterprise WAN network configuration and automatic service provisioning, to provide an easy, flexible, and high-quality enterprise WAN interconnection capability. SD-WAN usually has the following features:

### (1) Implementation of flexible IP overlay networking based on a hybrid WAN link

SD-WAN establishes an end-to-end overlay tunnel between edges at two sites, so that the SD-WAN transport network and an underlay transport network are independent of each other. An underlay network link may be a dedicated multiprotocol label switching (multiprotocol label switching, MPLS) line, a public internet, or a long term evolution (long term evolution, LTE) network.

### (2) Intelligent application-based traffic steering ensuring application experience

Enterprise applications are classified into diverse types, including production, collaboration, cloud, and entertainment applications. Different types of applications have different requirements on bandwidth and link quality. The SD-WAN usually identifies enterprise traffic by using an application identification technology, for example, deep packet inspection (deep packet inspection, DPI), and then performs classification and analysis, quality assessment, and path control based on application dimensions. In this way, high-value application traffic is prioritized for transmission over a high-quality but expensive path like MPLS, and low-value application traffic is directed over a lower-quality but cost-effective path like the internet.

### (3) Centralized control and visualization, and simple operation and maintenance

Based on centralized network monitoring and visualization, the centralized management is implemented, and efficiency of end-to-ed WAN management and efficiency of operation and maintenance are improved.

5. Underlay network and overlay network: The underlay network may be, for example, a conventional IT infrastructure network, and includes devices such as switches and routers. Driven by an Ethernet protocol, a routing protocol, a VLAN protocol, or the like, the underlay network is also an underlying network of the overlay network and provides a data communication service for the overlay network. The overlay network is a virtual network built over the underlay network. The overlay network cannot exist alone, and the underlying network that the overlay network relies on is the underlay network.

SD-WAN service forwarding can be controlled by a protocol of an RR control component on a control plane. An SD-WAN forwarding device uses the overlay IP tunneling technology to construct an overlay virtual network on a different physical underlay network. A source/destination IP of an overlay tunnel on the overlay virtual network is a WAN interface IP of an edge device. In an intermediate transport network, only a route to a link directly connected to the edge device needs to be advertised within the current network. In this way, in the underlay transport network, a tunnel packet can then be forwarded through routing until the tunnel packet reaches a destination edge device

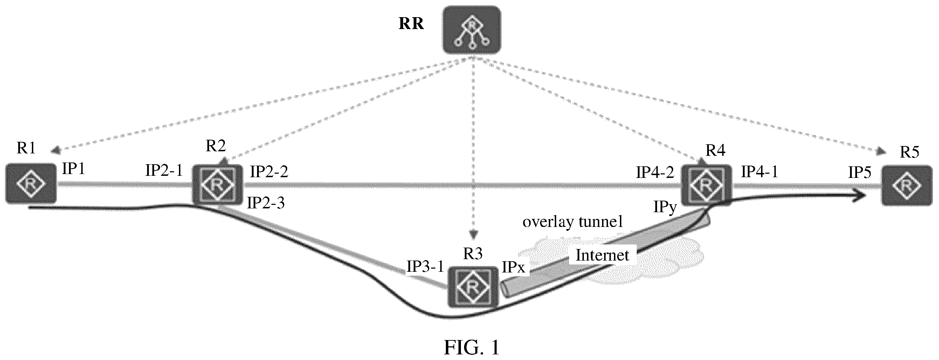

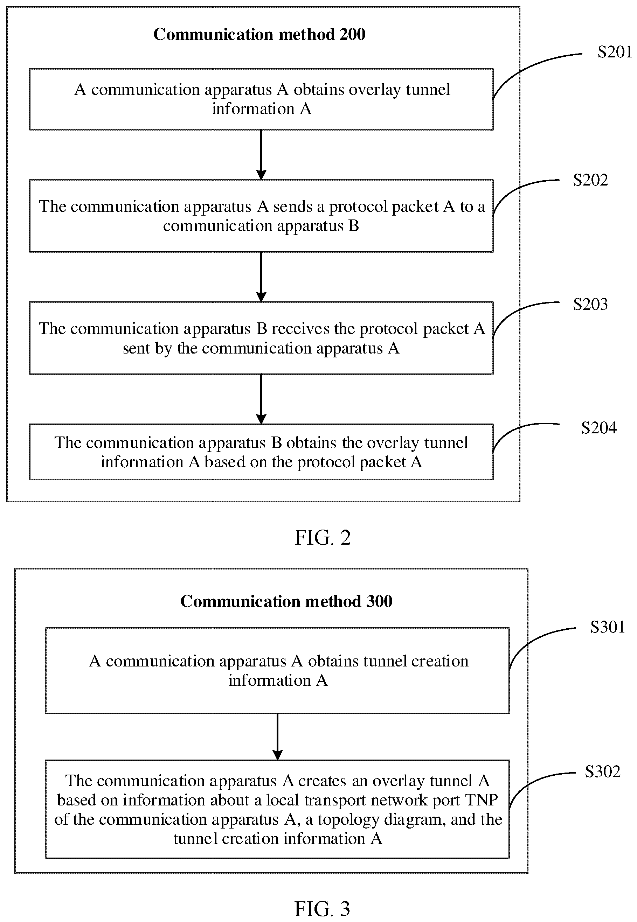

To resolve technical problems of complex configuration, heavy workload, and low data-plane encapsulation efficiency that are caused when an overlay tunnel is statically created step by step or a point-to-point virtual connection is statically configured, and information about the virtual connection is advertised based on an IGP or BGP, embodiments of this application provide a communication method. The communication method is applicable to an application scenario shown in FIG. 1. In the application scenario shown in FIG. 1, a node R1, a node R2, a node R3, a node R4, and a node R5 are used as network elements for points of presence (points of presence, POP) of a global backbone network, to establish the global backbone network, and a BGP SD-WAN neighbor is established between each of the node R1, the node R2, the node R3, the node R4, and the node R5 and a route reflector (route reflector, RR). An overlay tunnel is created between the node R3 and the node R4, and other nodes are connected by using dedicated lines. For example, FIG. 2 is a schematic flowchart of a communication method 200 according to an embodiment of this application. The schematic flowchart includes S201 to S204.

In a possible implementation, the communication method is implemented through the following steps.

S201: A communication apparatus A obtains overlay tunnel information A.

The overlay tunnel information A is associated with an overlay tunnel A created by the communication apparatus A. In an example, the communication apparatus A may be the node R3 in the application scenario shown in FIG. 1. Correspondingly, the overlay tunnel A may be the overlay tunnel that is created by the node R3 to the node R4. In a possible implementation, the overlay tunnel A is an SD-WAN overlay tunnel. In another possible implementation, the overlay tunnel A is a traffic engineering (traffic engineering, TE) tunnel. The overlay tunnel information A includes an IP address of a local transport network port TNP of the overlay tunnel A and an IP address of a peer transport network port TNP of the overlay tunnel A. For example, the IP address may be an IPv6 address or an IPv4 address. It should be noted that the overlay tunnel information A may further include a segment identifier SID of the overlay tunnel A that is in a Locator of the communication apparatus A and that is allocated to the overlay tunnel A. In a possible implementation, when the communication apparatus A accesses the internet, the Locator of the communication apparatus A may be obtained from an ISP according to a DHCP. In an example, as shown in FIG. 1, if the node R3 accesses the internet, the node R3 may obtain Locator of the node R3 from the ISP according to the DHCP. In another possible implementation, the Locator of the communication apparatus A may alternatively be obtained through global planning and allocation. The segment identifier SID of the overlay tunnel A may be an End.X SID.

In an example, it is assumed that the node R1, the node R2, the node R3, and the node R4 shown in FIG. 1 separately create an overlay tunnel pointing to a next node. The node R1, the node R2, the node R3, and the node R4 respectively allocate, within Locator of the node R1, the node R2, the node R3, and the node R4, End.X SIDs: IP1_SID, IP2_SID, IP3_SID and IP4_SID of overlay tunnels created by the node R1, the node R2, the node R3, and the node R4. The node R5 allocates, within the Locator of the node R5, an End.DT SID of one or more VPNs accessed by the node R5. In an embodiment of this application, it is assumed that the node R5 accesses one VPN, and an allocated End.DT SID is R5_VPN_SID. It may be understood that the End.X SID may be mapped to a corresponding transport network port TNP. For example, IP1_SID, IP2_SID, IP3_SID and IP4_SID are respectively mapped to a port IP1, a port IP2-3, a port IPx, and a port IP4-1.

In a possible implementation, for a procedure in which the communication apparatus A creates the overlay tunnel A, refer to a schematic flowchart shown in FIG. 3. For detailed descriptions of the schematic flowchart shown in FIG. 3, refer to the following content.

S202: The communication apparatus A sends a protocol packet A to a communication apparatus B.

In an embodiment of this application, the protocol may be an IGP or a user-defined protocol. The communication apparatus A notifies a local protocol process, for example, an IGP process, of the overlay tunnel information A associated with the overlay tunnel A created by the communication apparatus A and identification information of the communication apparatus A. IGP advertises the overlay tunnel information A and the identification information of the communication apparatus A externally via a link state packet (link state packet, LSP) or a link state advertisement (link state advertisement, LSA). In other words, the communication apparatus A transfers the overlay tunnel information A and the identification information of the communication apparatus A to the communication apparatus B according to the protocol, for example, IGP. In a possible implementation, the communication apparatus A enables an ISIS protocol based on a logical interface to establish a session with a logical interface of the communication apparatus B, and advertises the overlay tunnel information A and the identification information of the communication apparatus A according to the ISIS protocol.

Specifically, in an embodiment of this application, the communication apparatus A sends the protocol packet A to the communication apparatus B. For example, the protocol packet A may be an IGP packet A. The protocol packet A includes the identification information of the communication apparatus A and the overlay tunnel information A. In a possible implementation, the identification information of the communication apparatus A may be a unique identifier of the communication apparatus A.

It may be understood that in a possible implementation, the communication apparatus A may alternatively receive a protocol packet B sent by the communication apparatus B. For example, the protocol packet B may be an IGP packet B. The protocol packet B includes identification information of the communication apparatus B and overlay tunnel information B. The overlay tunnel information B is associated with an overlay tunnel B created by the communication apparatus B. In a possible implementation, the overlay tunnel B is an SD-WAN overlay tunnel. The identification information of the communication apparatus B may be a unique identifier of the communication apparatus B. The overlay tunnel information B includes an address pair of a local transport network port TNP of the overlay tunnel B and a peer transport network port TNP of the overlay tunnel B. It should be noted that the overlay tunnel information B may further include a segment identifier SID of the overlay tunnel B that is in a Locator of the communication apparatus B and that is allocated to the overlay tunnel B. The Locator of the communication apparatus B may be obtained from the ISP according to the DHCP, or may alternatively be obtained through global planning and allocation. The segment identifier SID of the overlay tunnel B may be an End.X SID.

It may be further understood that in a possible implementation, the communication apparatus A may further send a protocol packet C to a communication apparatus C. For example, the protocol packet C may be an IGP packet C. The communication apparatus C may be the node R2 in the application scenario shown in FIG. 1. Correspondingly, the communication apparatus A may alternatively receive a protocol packet D sent by the communication apparatus C. For example, the protocol packet D may be an IGP packet D. The protocol packet D includes identification information of the communication apparatus C and overlay tunnel information C. The overlay tunnel information C is associated with an overlay tunnel C created by the communication apparatus C. In a possible implementation, the overlay tunnel C is an SD-WAN overlay tunnel. The identification information of the communication apparatus C may be a unique identifier of the communication apparatus C. The overlay tunnel information C includes an IP address of a local transport network port TNP of the overlay tunnel C and an IP address of a peer transport network port TNP of the overlay tunnel C. It should be noted that the overlay tunnel information C may further include a segment identifier SID of the overlay tunnel C that is in a Locator of the communication apparatus C and that is allocated to the overlay tunnel C. The Locator of the communication apparatus C may be obtained from the ISP according to the DHCP, or may alternatively be obtained through global planning and allocation. The segment identifier SID of the overlay tunnel C may be an End.X SID.

In conclusion, the communication apparatus A may send a protocol packet to another communication apparatus, or may receive a protocol packet sent by another communication apparatus, for example, receive the protocol packet B sent by the communication apparatus B, or receive the protocol packet D sent by the communication apparatus C. In other words, in this application, the communication apparatus A transfers the identification information of the communication apparatus A and first overlay tunnel information to any communication apparatus via the protocol packet. In other words, the communication apparatus A may automatically spread the identification information of the communication apparatus A and the first overlay tunnel information to a multi-hop communication apparatus via the protocol packet, without manual configuration. In this way, workload is reduced. In this way, the multi-hop communication apparatus can obtain topology information based on the identification information of the communication apparatus A and the first overlay tunnel information, and calculate an overlay route to any communication apparatus based on the topology information. For example, each node in the application scenario shown in FIG. 1 may send a protocol packet to another node.

It may be understood that the communication apparatus A, the communication apparatus B, and the communication apparatus C may be devices such as a router or a switch, or may be a network adapter, a line card, a chip, or the like. In an embodiment of this application, specific forms of the communication apparatus A, the communication apparatus B, and the communication apparatus C are not specifically limited. The foregoing is merely an example for description.

It should be noted that a procedure in which the communication apparatus B creates the overlay tunnel B and a procedure in which the communication apparatus C creates the overlay tunnel C are similar to the procedure in which the communication apparatus A creates the overlay tunnel A. Details are not described herein again.

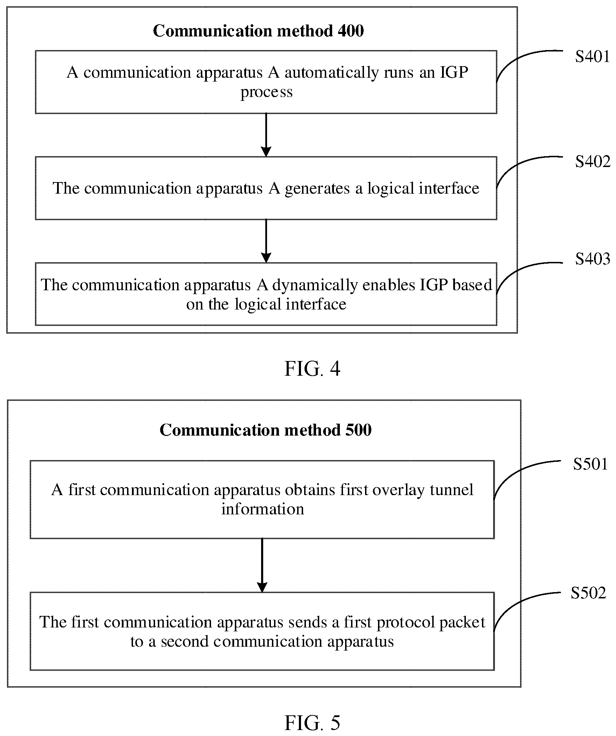

In a possible implementation, before the communication apparatus A sends the protocol packet A to the communication apparatus B, steps in a schematic flowchart shown in FIG. 4 need to be performed. For detailed descriptions of the schematic flowchart shown in FIG. 4, refer to the following content.

It should be further noted that in a possible implementation, the communication apparatus A may obtain the overlay topology information based on the overlay tunnel information A and the overlay tunnel information B after obtaining the overlay tunnel information A and the overlay tunnel information B. It may be understood that overlay tunnel information of each communication apparatus is spread according to the protocol, for example, IGP, and any communication apparatus may obtain topology information of an entire network.

In a possible implementation, the communication apparatus A may calculate an overlay route to the communication apparatus B based on the overlay topology information. In an example, the overlay route may be an SD-WAN overlay route. It may be understood that the communication apparatus A may calculate a route from the communication apparatus A to Locator of any destination communication apparatus based on a shortest path first (shortest path first, SPF) algorithm. Therefore, in an embodiment of this application, a route frome one communication apparatus to any communication apparatus in the entire network is reachable. As shown in FIG. 1, the node R1 may calculate a route to Locator of the node R5, and the route includes the Locator of the node R5, the IP1 as an outgoing interface, and an IPv6 address of an IP2-1 interface of the node R2 for a next hop.

S203: The communication apparatus B receives the protocol packet A sent by the communication apparatus A.

In an embodiment of this application, the communication apparatus B receives the protocol packet A sent by the communication apparatus A.

In a possible implementation, the communication apparatus B may further send the protocol packet B to the communication apparatus A.

In a possible implementation, the communication apparatus B may further send a protocol packet E to the communication apparatus C. Correspondingly, the communication apparatus B may receive a protocol packet F sent by the communication apparatus C.

In conclusion, the communication apparatus B may send a protocol packet to another communication apparatus, or may receive a protocol packet sent by another communication apparatus, for example, receive the protocol packet A sent by the communication apparatus A, or receive the protocol packet F sent by the communication apparatus C.

S204: The communication apparatus B obtains the overlay tunnel information A based on the protocol packet A.

In an embodiment of this application, the communication apparatus B obtains the overlay tunnel information A based on the protocol packet A.

In a possible implementation, the communication apparatus B may obtain the overlay topology information based on the overlay tunnel information A in the protocol packet A and the overlay tunnel information B in the protocol packet B.

In a possible implementation, the communication apparatus B may calculate an overlay route to the communication apparatus A based on the overlay topology information.

The following describes in detail the procedure in which the communication apparatus A creates the overlay tunnel A. In a possible implementation, an embodiment of this application provides a communication method 300, to create the overlay tunnel A through steps in the schematic flowchart shown in FIG. 3. The schematic flowchart shown in FIG. 3 includes S301 and S302, and a specific implementation procedure is as follows.

S301: The communication apparatus A obtains tunnel creation information A.

In an embodiment of this application, the communication apparatus A obtains the tunnel creation information A. The tunnel creation information A includes information about a local transport network port TNP of a peer communication apparatus and a topology diagram that are advertised by the peer communication apparatus for the to-be-created overlay tunnel A. In a possible implementation, the information about the local transport network port TNP includes an IP address of the local transport network port TNP, an operator identifier, and a routing domain.

In a possible implementation, the RR is deployed on a backbone POP network. The RR is responsible for SD-WAN route reflection between the communication apparatus A accessing the backbone POP network and another communication apparatus. If the communication apparatus A advertises information about a local transport network port TNP of the communication apparatus A and a topology diagram, the information about the local transport network port TNP and the topology diagram may reach the another communication apparatus after being reflected by the RR. Correspondingly, after being reflected by the RR, information about a local transport network port TNP of the another communication apparatus and a topology diagram that are advertised by the another communication apparatus may also reach the communication apparatus A. In other words, any communication apparatus may obtain information about a local transport network port TNP of another communication apparatus and a topology diagram that are advertised by the another communication apparatus.

It should be noted that an administrator may create topology diagrams by using the controller, and the topology diagrams are classified into the following types: a point-to-point (point-to-point, P2P) link, point-to-multipoint (point-to-multipoint, P2MP) links, full mesh links, and the like. The administrator may associate a corresponding topology diagram with a transport network port TNP of a communication apparatus. A BGP SD-WAN neighbor is deployed between the communication apparatus A and the RR, so that the communication apparatus A carries and advertises the topology diagram to another communication apparatus. The topology diagram includes a link type and a link ID. For example, link types are respectively P2P, P2MP, and full mesh, and link IDs corresponding to the link types are link ID, hub site ID and link ID.

In an example, as shown in FIG. 1, the node R3 creates the overlay tunnel pointing to the node R4. A BGP SD-WAN neighbor is deployed between each node and the RR, so that each node carriers and advertises a topology diagram of the node and information about a local transport network port TNP to another node. Any node may obtain, by using the RR, information about a local transport network port TNP of another node and a topology diagram of the another node that are advertised by the another node. For example, there is a topology-defined matching adjacency between a local transport network port TNP of the node R3, that is, the IPx, and a local transport network port TNP of the node R4, that is, an IPy. In other words, link types of the two nodes are both P2P, and link IDs match each other. Therefore, an overlay tunnel may be created between the node R3 and the node R4.

S302: The communication apparatus A creates the overlay tunnel A based on the information about the local transport network port TNP of the communication apparatus A, the topology diagram, and the tunnel creation information A.

In an embodiment of this application, it should be first noted that only when the communication apparatus A is physically connected to a peer communication apparatus for the to-be-created overlay tunnel A, the overlay tunnel A from the communication apparatus A to the peer communication apparatus can be created.

In a possible implementation, the communication apparatus A first determines whether a route from an IP address of the local transport network port TNP of the communication apparatus A to an IP address of a local transport network port TNP of the peer communication apparatus is reachable. If the route is reachable, the communication apparatus A creates the overlay tunnel A between the communication apparatus A and the peer communication apparatus based on the topology diagram of the communication apparatus A and a topology diagram advertised by the peer communication apparatus. It should be noted that the topology diagram may include at least one link ID and a link type corresponding to the link ID. When a link ID and a link type corresponding to the link ID in the topology diagram of the communication apparatus A are consistent with a link ID and a link type corresponding to the link ID in the topology diagram advertised by the peer communication apparatus, the communication apparatus A may create the overlay tunnel A to the peer communication apparatus. It may be understood that the link ID may be used as an ID of the overlay tunnel A.

In an example, as shown in FIG. 1, after obtaining, by using the RR, information about the local transport network port TNP of the node R4 and a topology diagram of the node R4 that are advertised by the node R4, the node R3 first determines whether a route from the local transport network port TNP of the node R3, that is, an IP address of the IPx, to the local transport network port TNP of the node R4, that is, an IP address of the IPy, is reachable. If the route is reachable, based on the topology diagram of the node R3 and the topology diagram advertised by the node R4, an overlay tunnel between the node R3 and the node R4 is created.

The following describes in detail steps that need to be performed before the communication apparatus A sends the protocol packet A. For example, the protocol is IGP. An embodiment of this application provides a communication method 400. A schematic flowchart of the communication method 400 includes S401 to S403, and a specific implementation procedure is as follows.

S401: The communication apparatus A automatically runs an IGP process.

In an embodiment of this application, the communication apparatus A automatically runs the IGP process. In a possible implementation, the communication apparatus A uses a reserved IGP process number. It may be understood that if a packet needs to be forwarded between communication apparatuses, IGP process numbers need to be the same.

In a possible implementation, the communication apparatus A automatically runs an intermediate system to intermediate system (intermediate system to intermediate system, ISIS) process, and uses a reserved ISIS process number, for example, 65534.

In an example, both the node R3 and the node R4 shown in FIG. 1 need to run IGP , where IGP process numbers are the same, to forward a packet to each other.

S402: The communication apparatus A generates a logical interface.

In an embodiment of this application, the communication apparatus A generates the logical interface.

In a possible implementation, the communication apparatus A applies to create a logical interface for the overlay tunnel A, and the SD-WAN names the logical interface. The SD-WAN checks whether the route to the IP address of the local transport network port TNP of the peer communication apparatus for the overlay tunnel A is reachable. If route is reachable, the SD-WAN sets a status of the logical interface to UP, and applies to an interface file manager (interface file manager, IFM) for creation of the logical interface based on information of the logical interface, such as a name, an address, and the state UP of the logical interface.

In a possible implementation, the logical interface may be a generic routing encapsulation (generic routing encapsulation, GRE) interface. The address of the logical interface may adopt the IP address of the local transport network port TNP of the communication apparatus A.

In an example, as shown in FIG. 1, the node R3 applies to create a GRE logical interface for the overlay tunnel A, and the SD-WAN names the logical interface GRE1. An address of the GRE1 logical interface adopts the local transport network port TNP of the node R3, that is, the IP address of the IPx. The SD-WAN checks whether the route to the local transport network port TNP, that is, the address of the IPy, of the peer node R4 for the overlay tunnel A is reachable. If route is reachable, the SD-WAN sets a status of the GRE1 logical interface to UP, and applies to the IFM for creation of the GRE1 logical interface based on information of the GRE1 logical interface, such as the name GRE1 of the logical interface, an address of the logical interface, and the state UP of the logical interface.

S403: The communication apparatus A dynamically enables IGP based on the logical interface.

In an embodiment of this application, the communication apparatus A dynamically enables IGP based on the logical interface. For example, the communication apparatus A enables an open shortest path first (open shortest path first, OSPF) protocol or the ISIS protocol based on the logical interface.

In an example, as shown in FIG. 1, the node R3 enables IGP based on the logical interface GRE1.

According to the technical solution provided in embodiments of this application, IGP can be automatically run, the logical interface corresponding to the overlay tunnel is automatically generated based on the overlay tunnel, and IGP can be automatically enabled based on the logical interface. The entire procedure is automatically implemented, and for the global backbone network, efficiency of networking and deployment, and efficiency of operation and maintenance efficiency are improved.

Based on a same concept as the foregoing method embodiments, an embodiment of this application further provides a communication method 500. The method 500 may be applied to the application scenario shown in FIG. 1, to specifically implement the method 100. When the method 500 is applied to the application scenario shown in FIG. 1, a first communication apparatus may be, for example, the node R3 shown in FIG. 1, and a second communication apparatus may be, for example, the node R4 shown in FIG. 1. A schematic flowchart of the communication method 500 is shown in FIG. 5. The schematic flowchart includes S501 and S502, and a specific implementation procedure is as follows.

S501: A first communication apparatus A obtains first overlay tunnel information.

When the method 500 is specifically used to implement the method 100, in an embodiment of this application, the first communication apparatus may be the communication apparatus A in the method 100, and the first overlay tunnel information may be the overlay tunnel information A in the method 100. A specific implementation procedure of S501 is similar to that of S201, and details are not described herein again.

S502: The first communication apparatus sends a first protocol packet to the second communication apparatus.

In an embodiment of this application, the second communication apparatus may be the communication apparatus B in the method 200, and the first protocol packet may be the protocol packet A in the method 200. A specific implementation procedure of S502 is similar to that of S202, and details are not described herein again.

It should be noted that in a possible implementation, the first protocol packet is a first IGP packet. Before S502 is performed, the following steps need to be performed.

First, the first communication apparatus automatically runs the IGP process. A specific implementation procedure is similar to that of S401, and details are not described herein again.

Then, the first communication apparatus generates a logical interface. A specific implementation procedure is similar to that of S402, and details are not described herein again.

Finally, the first communication apparatus dynamically enables IGP based on the logical interface. A specific implementation procedure is similar to that of S403, and details are not described herein again.

In a possible implementation, the first communication apparatus receives a second protocol packet sent by the second communication apparatus. The second protocol packet may be the protocol packet B in the method 200. The second protocol packet includes identification information of the second communication apparatus and second overlay tunnel information, and the second overlay tunnel information is associated with a second overlay tunnel created by the second communication apparatus. The second overlay tunnel information may be the overlay tunnel information B in the method 200, and the second overlay tunnel may be the overlay tunnel B in the method 200.

In a possible implementation, the first communication apparatus sends a third protocol packet to a third communication apparatus. A third protocol packet may be the protocol packet C in the method 200. The third communication apparatus may be the communication apparatus C in the method 200.

In a possible implementation, the first communication apparatus receives a fourth protocol packet sent by the third communication apparatus. The fourth protocol packet may be the protocol packet D in the method 200. The fourth protocol packet includes identification information of the third communication apparatus and third overlay tunnel information, and the third overlay tunnel information is associated with a third overlay tunnel created by the third communication apparatus. The third overlay tunnel information may be the overlay tunnel information C in the method 200, and the third overlay tunnel may be the overlay tunnel C in the method 200.

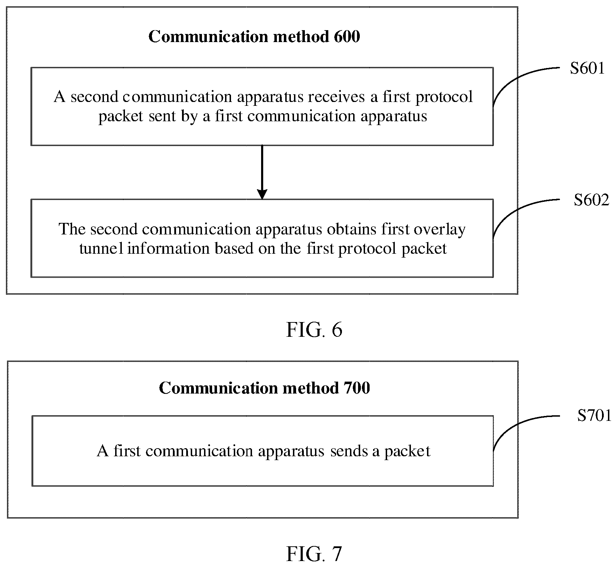

Based on a same concept as the foregoing method embodiments, an embodiment of this application further provides a communication method 600. The method 600 may be applied to the application scenario shown in FIG. 1, to specifically implement the method 100. When the method 600 is applied to the application scenario shown in FIG. 1, a first communication apparatus may be, for example, the node R3 shown in FIG. 1, and a second communication apparatus may be, for example, the node R4 shown in FIG. 1. A schematic flowchart of the communication method 600 is shown in FIG. 6. The schematic flowchart includes S601 and S602, and a specific implementation procedure is as follows.

S601: The second communication apparatus receives a first protocol packet sent by the first communication apparatus.

In an embodiment of this application, a specific implementation procedure of S601 is similar to that of S203, and details are not described herein again.

S602: The second communication apparatus obtains first overlay tunnel information based on the first protocol packet.

In an embodiment of this application, a specific implementation procedure of S602 is similar to that of S204, and details are not described herein again.

In a possible implementation, the second communication apparatus sends a second protocol packet to the first communication apparatus.

In a possible implementation, the second communication apparatus sends a fifth protocol packet to a third communication apparatus. The fifth protocol packet may be the protocol packet E in the method 200.

In a possible implementation, the second communication apparatus receives a sixth protocol packet sent by the third communication apparatus. The sixth protocol packet may be the protocol packet F in the method 200.

Based on a same concept as the foregoing method embodiments, an embodiment of this application further provides a communication method 700. The method 700 may be applied to the application scenario shown in FIG. 1. When the method 700 is applied to the application scenario shown in FIG. 1, a first communication apparatus may be, for example, the node R3 shown in FIG. 1. A schematic flowchart of the method 700 is shown in FIG. 7. The schematic flowchart includes S701, and a specific implementation procedure is as follows.

S701: The first communication apparatus sends a packet.

In an embodiment of this application, the first communication apparatus sends the packet. The packet includes an IP address of a local transport network port TNP of a first overlay tunnel created by the first communication apparatus, an IP address of a peer transport network port TNP, a generic routing encapsulation GRE header, an IP header, a destination IP address of a user host, and user data, where the GRE header indicates a type for an encapsulated IP header.

In a possible implementation, the IP header may be an IPv6 header, or may be an IPv4 header.

In other words, the first communication apparatus forwards the user data based on the IP address of the local transport network port TNP of the first overlay tunnel and the IP address of the peer transport network port TNP of the first overlay tunnel.

It should be noted that an overlay tunnel is created to ensure a service level agreement (service level agreement, SLA), and a TE path that meets a service requirement for a network differentiated service is calculated in a distributed manner. In this way, network reliability is enhanced.

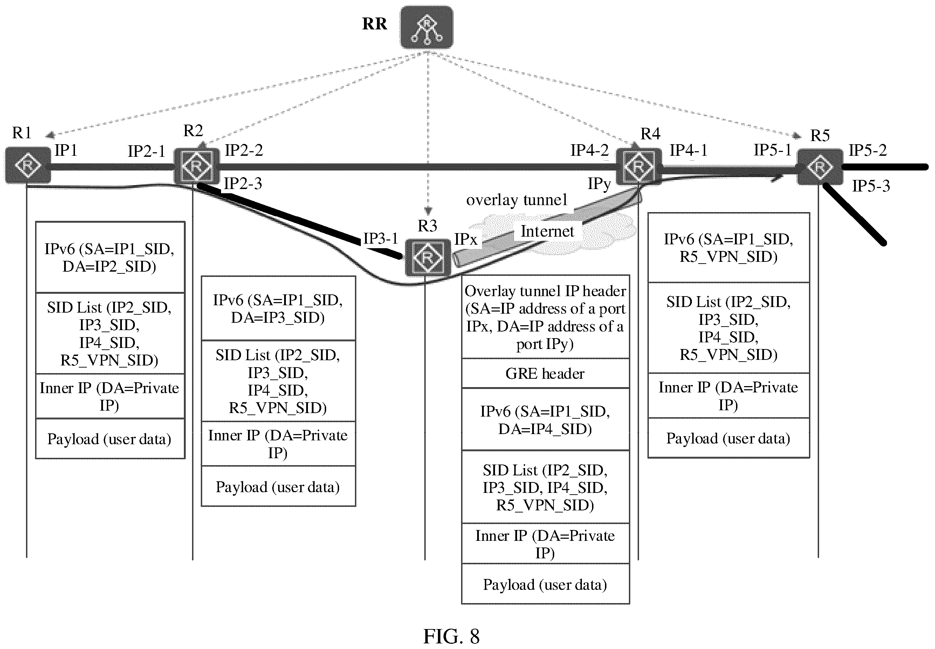

The following describes in detail a detailed procedure of forwarding a packet through overlay segment routing over IPv6 (segment routing over IPv6, SRv6) TE. An example in which a low-latency TE path from the node R1 to the node R5 is calculated is used for description. For a diagram of the example, refer to FIG. 8.

The node R1, as an ingress device for overlay SRv6 TE forwarding in the global backbone network, searches a private network routing table for a data packet and iterates an SRv6 TE POLICY path. For the SRv6 path, an SID List is arranged and then encapsulated in the private IP header of the data packet. The SID List is (IP2_SID, IP3_SID, IP4_SID, R5_VPN_SID), and IPv6 is (SA=End.X SID of the port IP1, DA=End.X SID of the port IP2-3), that is, IPv6 is (SA=IP1_SID, DA= IP2_SID).

At the node R2, the SID List is (IP2_SID, IP3_SID, IP4_SID, R5_VPN_SID). Based on an SRH SID List, the destination IP in the IPv6 header is offset and changed to the End.X SID of the port IPx. In other words, IPv6 is (SA=End.X SID of the port IP1, DA=End.X SID of the port IPx), that is, IPv6 is (SA=IP1_SID, DA=IP3_SID).

The node R3 indicates an outer encapsulated overlay tunnel IP header, a GRE header, an IP header, a destination IP address of a user host, and user data on a basis that the destination IP is the IPy. The outer overlay tunnel IP header includes an IP address of a local transport network port TNP of an overlay tunnel and an IP address of a peer transport network port TNP of the overlay tunnel. For example, the IP address may be an IPv6 address. In other words, the encapsulated overlay tunnel IP header is (SA=IPv6 address of the port IPx, DA=IPv6 address of the port IPy). The GRE header indicates the type of the encapsulated IP header, for example, an encapsulated IPv6 header or IPv4 header. Based on the SRH SID list, the destination IP in the IPv6 header is offset and changed to the End.X SID of the port IP4-1. In other words, IPv6 is (SA=End.X SID of the port IP1, DA=End.X SID of the port IP4-1), that is, IPv6 is (SA=IP1_SID, DA=IP4_SID). The SID List is (IP2_SID, IP3_SID, IP4_SID, R5_VPN_SID).

At the node R4, the SID List is (IP2_SID, IP3_SID, IP4_SID, R5_VPN_SID). Based on the SRH SID List, the destination IP of the IPv6 header is offset and changed to the End.DT SID of the VPN accessed by the node R5. In other words, IPv6 is (SA=End.X SID of the port IP1, DA=End.DT SID of the VPN accessed by the node R5), that is, IPv6 is (SA=IP1_SID, DA=R5 _VPN_SID).

The node R5 searches for a corresponding private network forwarding table after the destination IP is offset, based on the SRH SID list, to the last SID, that is, the SID of the VPN accessed by the node R5, that is, End.DT SID (R5_VPN_SID), and searches a corresponding private network forwarding table for a route based on a destination address in an inner private IP header, to forward the service packet. At the same time, the SID list is decapsulated. It can be learned that, compared with statically creating overlay tunnels step by step or statically configuring a point-to-point virtual connection, in this embodiment of this application, SRv6 path orchestration SID List encapsulation only needs to be performed on the node R1, and SID List decapsulation needs to be performed on the node R5, thereby improving data plane encapsulation efficiency.

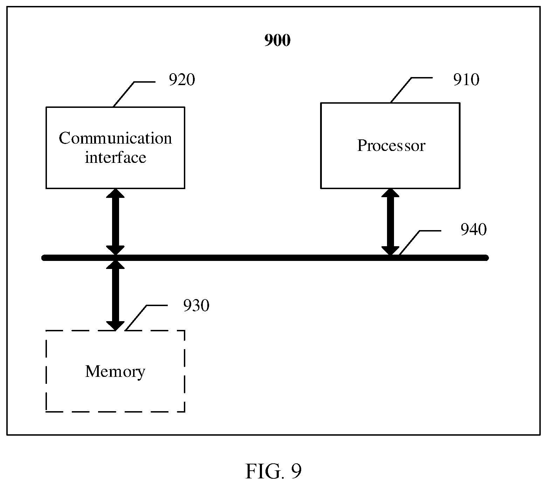

Refer to FIG. 9. An embodiment of this application further provides a communication apparatus 900, configured to implement functions of the first communication apparatus and/or the second communication apparatus in the foregoing methods. The communication apparatus 900 may be a chip system. In an embodiment of this application, the chip system may include a chip, or may include a chip and another discrete component. The communication apparatus 900 includes at least one processor 910, configured to implement the functions of the first communication apparatus and/or the second communication apparatus in the method provided in embodiments of this application. The communication apparatus 900 may further include a communication interface 920. In an embodiment of this application, the communication interface 920 may be a transceiver, a circuit, a bus, a module, or another type of communication interface, and is configured to communicate with another device through a transmission medium.

When the communication apparatus 900 is configured to perform operations performed by the first communication apparatus, the processor 910 is configured to obtain first overlay tunnel information, where the first overlay tunnel information is associated with a first overlay tunnel created by the first communication apparatus. The communication interface 920 is configured to send a first protocol packet to a second communication apparatus, where the first protocol packet includes identification information of the first communication apparatus and the first overlay tunnel information.

When the communication apparatus 900 is configured to perform operations performed by the second communication apparatus, the communication interface 920 is configured to receive a first protocol packet sent by a first communication apparatus, where the first protocol packet includes identification information of the first communication apparatus and first overlay overlay tunnel information, and the first overlay tunnel information is associated with a first overlay tunnel created by the first communication apparatus. The processor 910 is configured to obtain the first overlay tunnel information based on the first protocol packet.

The communication interface 920 is further configured to perform other receiving or sending steps or operations related to the method performed by the first communication apparatus and/or the second communication apparatus in the foregoing method embodiments. The processor 910 may be further configured to perform corresponding steps or operations other than receiving and sending in the foregoing method embodiments. Details are not described herein again.

The communication apparatus 900 may further include at least one memory 930, configured to store program instructions and/or data. The memory 930 is coupled to the processor 910. Coupling in this embodiment of this application is indirect coupling or a communication connection between apparatuses, units, or modules, may be in electrical, mechanical, or other forms, and is used for information exchange between the apparatuses, the units, and the modules. The processor 920 may operate in collaboration with the memory 930. The processor 910 may execute the program instructions stored in the memory 930. In a possible implementation, at least one of the at least one memory may be integrated with the processor. In another possible implementation, the memory 930 is located outside the communication apparatus 900.

In an embodiment of this application, a specific connection medium between the communication interface 920, the processor 910, and the memory 930 is not limited. In an embodiment of this application, in FIG. 9, the memory 930, the processor 910, and the communication interface 920 are connected through a bus 940, and the bus is represented using a bold line in FIG. 9. A connection manner between other components is merely an example for description, and imposes no limitation. The bus may be classified into an address bus, a data bus, a control bus, and the like. For ease of indication, the bus is indicated by using only one bold line in FIG. 9. However, it does not indicate that there is only one bus or only one type of bus.

For example, the processor 910 may be one or more central processing units (central processing unit, CPU). When the processor 910 is a CPU, the CPU may be a single-core CPU or a multi-core CPU. The processor 910 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed and completed by a hardware processor, or may be performed and completed by using a combination of hardware and software modules in the processor.

For example, the memory 930 may include but is not limited to a non-volatile memory such as a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), or a portable read-only memory (compact disc read-only memory, CD-ROM) The memory is any other medium that can be used to carry or store expected program code in a form of an instruction or a data structure and that can be accessed by a computer. However, this is not limited thereto. The memory in embodiments of this application may alternatively be a circuit or any other apparatus that can implement a storage function, and is configured to store program instructions and/or data.

Based on a same concept as the foregoing method embodiments, an embodiment of this application provides a computer-readable storage medium. The computer-readable storage medium stores a computer program. When the computer program is executed by a processor, some or all steps corresponding to FIG. 2 to FIG. 7 are performed.

Based on a same concept as the foregoing method embodiments, an embodiment of this application further provides a computer program product including instructions. When the computer program product is run on a computer, the computer is enabled to perform some or all steps corresponding to FIG. 2 to FIG. 7.

Based on a same concept as the foregoing method embodiments, an embodiment of this application further provides a communication system, including the first communication apparatus and the second communication apparatus in the method 200.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A communication method, wherein the method is performed by a first communication apparatus, and the method comprises:
obtaining first overlay tunnel information, wherein the first overlay tunnel information is associated with a first overlay tunnel created by the first communication apparatus; and
sending a first protocol packet to a second communication apparatus, wherein the first protocol packet comprises identification information of the first communication apparatus and the first overlay tunnel information.

2. The method according to claim 1, wherein the first protocol packet is a first interior gateway protocol IGP packet.

3. The method according to claim 2, wherein the method further comprises:
automatically running an IGP process;
generating a logical interface; and
dynamically enabling IGP based on the logical interface.

4. The method according to claim 3, wherein an address of the logical interface is the same as an internet protocol IP address of a local transport network port TNP of the first overlay tunnel.

5. The method according to any one of claims 1 to 4, wherein the first overlay tunnel information comprises the IP address of the local transport network port TNP of the first overlay tunnel and an IP address of a peer transport network port TNP of the first overlay tunnel.

6. The method according to claim 5, wherein the first overlay tunnel information further comprises a first overlay tunnel segment identifier SID that is in a Locator of the first communication apparatus and that is allocated to the first overlay tunnel.

7. The method according to claim 6, wherein the first overlay tunnel SID is an End.X SID.

8. The method according to claim 6 or 7, wherein the method further comprises:
obtaining the Locator from an internet service provider ISP according to a dynamic host configuration protocol DHCP.

9. The method according to any one of claims 1 to 8, wherein the method further comprises:
receiving a second protocol packet sent by the second communication apparatus, wherein the second protocol packet comprises identification information of the second communication apparatus and second overlay tunnel information, and the second overlay tunnel information is associated with a second overlay tunnel created by the second communication apparatus.

10. The method according to claim 9, wherein the second protocol packet is a second IGP packet.

11. The method according to claim 9 or 10, wherein the second overlay tunnel information comprises an IP address of a local transport network port TNP of the second overlay tunnel and an IP address of a peer transport network port TNP of the second overlay tunnel.

12. The method according to any one of claims 9 to 11, wherein the second overlay tunnel information further comprises a second overlay tunnel SID that is within Locator of the second communication apparatus and that is allocated to the second overlay tunnel.

13. The method according to any one of claims 9 to 12, wherein the method further comprises: obtaining overlay topology information based on the first overlay tunnel information and the second overlay tunnel information.

14. The method according to claim 13, wherein the method further comprises: calculating an overlay route to the second communication apparatus based on the overlay topology information.

15. The method according to claim 14, wherein the overlay route is a software-defined wide area network SD-WAN overlay route.

16. The method according to any one of claims 1 to 15, wherein the first overlay tunnel is a software-defined wide area network SD-WAN overlay tunnel.

17. The method according to any one of claims 1 to 16, wherein the method further comprises:
sending a third protocol packet to a third communication apparatus, wherein the third protocol packet comprises the identification information of the first communication apparatus and the first overlay tunnel information.

18. The method according to claim 17, wherein the third protocol packet is a third IGP packet.

19. The method according to claim 17 or 18, wherein the method further comprises:
receiving a fourth protocol packet sent by the third communication apparatus, wherein the fourth protocol packet comprises identification information of the third communication apparatus and third overlay tunnel information, and the third overlay tunnel information is associated with a third overlay tunnel created by the third communication apparatus.

20. A communication method, wherein the method is performed by a second communication apparatus, and the method comprises:
receiving a first protocol packet sent by a first communication apparatus, wherein the first protocol packet comprises identification information of the first communication apparatus and first overlay tunnel information, and the first overlay tunnel information is associated with a first overlay tunnel created by the first communication apparatus; and
obtaining the first overlay tunnel information based on the first protocol packet.

21. The method according to claim 20, wherein the method further comprises:
obtaining overlay topology information based on the first overlay tunnel information and second overlay tunnel information, wherein the second overlay tunnel information is associated with a second overlay tunnel created by the second communication apparatus.

22. The method according to claim 21, wherein the method further comprises: calculating an overlay route to the first communication apparatus based on the overlay topology information.

23. The method according to claim 21 or 22, wherein the second overlay tunnel is a software-defined wide area network SD-WAN overlay tunnel.

24. The method according to any one of claims 20 to 23, wherein the method further comprises:
sending a second protocol packet to the first communication apparatus, wherein the second protocol packet comprises identification information of the second communication apparatus and the second overlay tunnel information.

25. The method according to any one of claims 20 to 23, wherein the method further comprises:
sending a fifth protocol packet to a third communication apparatus, wherein the fifth protocol packet comprises identification information of the second communication apparatus and the second overlay tunnel information.

26. The method according to claim 25, wherein the method further comprises:
receiving a sixth protocol packet sent by the third communication apparatus, wherein the sixth protocol packet comprises identification information of the third communication apparatus and third overlay tunnel information, and the third overlay tunnel information is associated with a third overlay tunnel created by the third communication apparatus.

27. A communication apparatus, comprising at least one processor, wherein the processor is configured to execute a program stored in a memory, and when the program is executed, the apparatus is enabled to perform the method according to any one of claims 1 to 19 or the method according to any one of claims 20 to 26.

28. A computer program product comprising instructions, wherein when the computer program product is run on a processor, the method according to any one of claims 1 to 19 or the method according to any one of claims 20 to 26 is performed:

29. A computer-readable storage medium, wherein the computer-readable storage medium stores a computer program, and when the computer program is executed by a processor, the method according to any one of claims 1 to 19 or the method according to any one of claims 20 to 26 is implemented.

30. A communication system, wherein the communication system comprises a first communication apparatus and a second communication apparatus, the first communication apparatus is configured to perform the method according to any one of claims 1 to 19, and the second communication apparatus is configured to perform the method according to any one of claims 20 to 26.
